**Europäisches Patentamt**

**European Patent Office**

**Office européen des brevets**

(19)

(11) Veröffentlichungsnummer : **0 187 179**
**B1**

(12)

# EUROPÄISCHE PATENTSCHRIFT

(45) Veröffentlichungstag der Patentschrift :
27.07.88

(51) Int. Cl.⁴ : **F 16 K 11/00**

(21) Anmeldenummer : 85100197.4

(22) Anmeldetag : 10.01.85

(54) Armatur für über der Armatur montierte Überlauf-Heisswassergeräte.

(43) Veröffentlichungstag der Anmeldung :
16.07.86 Patentblatt 86/29

(45) Bekanntmachung des Hinweises auf die Patenterteilung : 27.07.88 Patentblatt 88/30

(84) Benannte Vertragsstaaten :
BE CH DE FR IT LI LU NL

(56) Entgegenhaltungen :
DE-A- 1 679 757
DE-B- 1 175 408
DE-B- 1 285 269
DE-B- 2 107 972
GB-A-   535 215

(73) Patentinhaber : Firma Meloh-Armaturen GmbH
Im Mühlental 17
D-5860 Iserlohn 7 (DE)

(72) Erfinder : Meloh, Hansgert
Oestricher Strasse 146
D-5860 Iserlohn 7 (DE)
Erfinder : Ruppel, Horst-Friedrich
Rauhe Hardt 4
D-5860 Iserlohn 7 (DE)
Erfinder : Ruppel, Manfred
Rauhe Hardt 8
D-5860 Iserlohn 7 (DE)

(74) Vertreter : Dörner, Lothar, Dipl.-Ing.
Stresemannstrasse 15
D-5800 Hagen (DE)

## Beschreibung

Die Erfindung bezieht sich auf eine Armatur für über einem Armaturenkörpermontierte Überlauf-Heißwassergeräte mit einem Mischwasser-Ablauf, mit einem Kaltwasser-Zulauf, der in eine mit einem Warmventil versehene Kaltwasser-Gerätezuführung zu einem Gerätezulauf für das Heißwassergerät und in eine mit einem Kaltventil versehene Kaltwasser-Ablaufzuführung zum Mischwasser-Ablauf geteilt ist, sowie mit einem aus dem Heißwassergerät gespeisten Warmwasser-Überlauf, der in den Mischwasser-Ablauf mündet (vgl. GB-A-535 215).

Armaturen der vorgenannten Art sind als Überlauf-Armaturen bekannt. Sie haben in der Regel — nach DIN 44897 — in der Ansicht des Heißwassergeräts auf der rechten Seite das Warmventil und auf der linken Seite das Kaltventil. Diese Anordnung steht genau im Gegensatz zu Druckarmaturen, die links das Warmventil und rechts das Kaltventil haben. Druckarmaturen sind weitaus gebräuchlicher als Überlaufarmaturen. Das führt dazu, daß ein Benutzer, der den Umgang mit Druckarmaturen gewohnt ist und keine Überlaufarmaturen kennt, bei Bedienung einer Überlaufarmatur Gefahr läuft, sich durch einen Bedienungsfehler zu verbrühen.

Hier will die Erfindung Abhilfe schaffen. Die Erfindung, wie sie in den Ansprüchen gekennzeichnet ist, löst die Aufgabe, eine Armatur für über der Armatur montierte Überlauf-Heißwassergeräte der eingangs genannten Art so auszubilden, daß unter Beibehaltung der Installationsanschlüsse an das Heißwassergerät die Bedienung gleich der von Druckarmaturen ist.

Die durch die Erfindung erreichten Vorteile sind im wesentlichen darin zu sehen, daß die Kaltwasser-Zuführung zu dem an das Heißwassergerät angeschlossenen Kaltwasser-Zulauf und der aus dem Heißwassergerät gespeiste Warmwasser-Überlauf gegenüber bekannten Überlauf-Heißwassergeräten, außerdem der Mischwasser-Ablauf unverändert bleiben. Das Kaltventil und das Warmventil sind dagegen so angeordnet, wie es von den überwiegend verwendeten Druckarmaturen bekannt ist. Der Benutzer muß also nicht umdenken ; vielmehr zapft er — wie er es von Druckarmaturen gewohnt ist — mit dem rechts angeordneten Ventil Kaltwasser, mit dem links angeordneten Ventil Warmwasser. Ein Bedienungsfehler infolge Verwechselung der Überlaufarmatur mit einer Druckarmatur kann nicht mehr auftreten.

Bei der ersten Ausführung wird die Führung der Wasserkanäle wesentlich durch eine Umlenkhülse bestimmt. Bei der zweiten Ausführung kreuzen sich einige Wasserkanäle in der Armatur.

Im folgenden wird die Erfindung anhand von lediglich zwei Ausführungswege darstellenden Zeichnungen näher erläutert. Es zeigt

Fig. 1    einen Vertikalschnitt durch eine Armatur mit einer Umlenkhülse ;

Fig. 2    einen Horizontalschnitt durch die in Fig. 1 dargestellte Armatur in Höhe der Umlenkhülse ;

Fig. 3    die Ansicht einer anderen Armatur in Richtung der Kaltwasserzufuhr ;

Fig. 4    die Ansicht der in Fig. 3 dargestellten Armatur in Richtung des Mischwasserablaufs.

Die als Ausführungsbeispiele gewählten Überlauf-Armaturen weisen je einen Armaturenkörper 1 auf. In dem Armaturenkörper 1 sind folgende Verbindungen für Außenanschlüsse vorgesehen, wobei sich die Seitenbezeichnungen auf die Ansicht des an ein nicht dargestelltes Heißwassergerät montierten Armaturenkörpers 1 beziehen : Mittig in einer Horizontalebene ein Kaltwasser-Zulauf 2 ; senkrecht zu dem Kaltwasser-Zulauf 2 nach unten gerichtet ein Mischwasser-Ablauf 3 ; parallel zu dem Mischwasser-Ablauf 3, jedoch nach oben gerichtet und im Abstand voneinander rechts ein Gerätezulauf 4 für Kaltwasser und links ein Warmwasser-Überlauf 5 ; seitlich an den vorderen Enden rechts ein nur mit einem Ventilsitz dargestelltes Kaltventil 6 und links ein ebenfalls nur mit einem Ventilsitz dargestelltes Warmventil 7. Die äußeren Anschlüsse für den Kaltwasser-Zulauf 2, den Warmwasser-Überlauf 5 und den Mischwasser-Ablauf 3 sind in der Raumform gegenüber herkömmlichen Armaturen für Überlauf-Heißwassergeräte unverändert. Dagegen sind die Anordnung des Kaltventils 6 und des Warmventils 7 bezogen auf die Symmetrieebene des Armaturenkörpers 1 verglichen mit herkömmlichen Armaturen spiegelsymmetrisch versetzt angeordnet.

Der Kaltwasser-Zulauf 2 ist in dem Armaturenkörper 1 in eine Gerätezuführung 11 und eine Ablaufzuführung 14 geteilt. Als Gerätezuführung 11 ist dabei eine mit dem Warmventil 7 versehene Kaltwasser-Zuführung für den Gerätezulauf 4 bezeichnet ; als Ablaufzuführung 14 eine mit dem Kaltventil 6 versehene Kaltwasser-Zuführung zum Mischwasser-Ablauf 3. Die Gerätezuführung 11 ist ihrerseits unterteilt in einen in Strömungsrichtung bei dem Warmventil 7 ankommenden Teil 12 und einen vom Warmventil 7 abgehenden Teil 13 ; die Ablaufzuführung 14 in einen in Strömungsrichtung bei dem Kaltventil 6 ankommenden Teil 15 und einen von dem Kaltventil 6 abgehenden Teil 16. Das Kaltventil 6 mit der Ablaufzuführung 14 und das Warmventil 7 mit dem ankommenden Teil 12 der Gerätezuführung 11 sind ebenfalls bezogen auf die Symmetrieebene der Armatur verglichen mit herkömmlichen Armaturen spiegelsymmetrisch versetzt angeordnet. Der von dem Warmventil 7 abgehende Teil 13 der Gerätezuführung 11 durchsetzt den Armaturenkörper 1 quer.

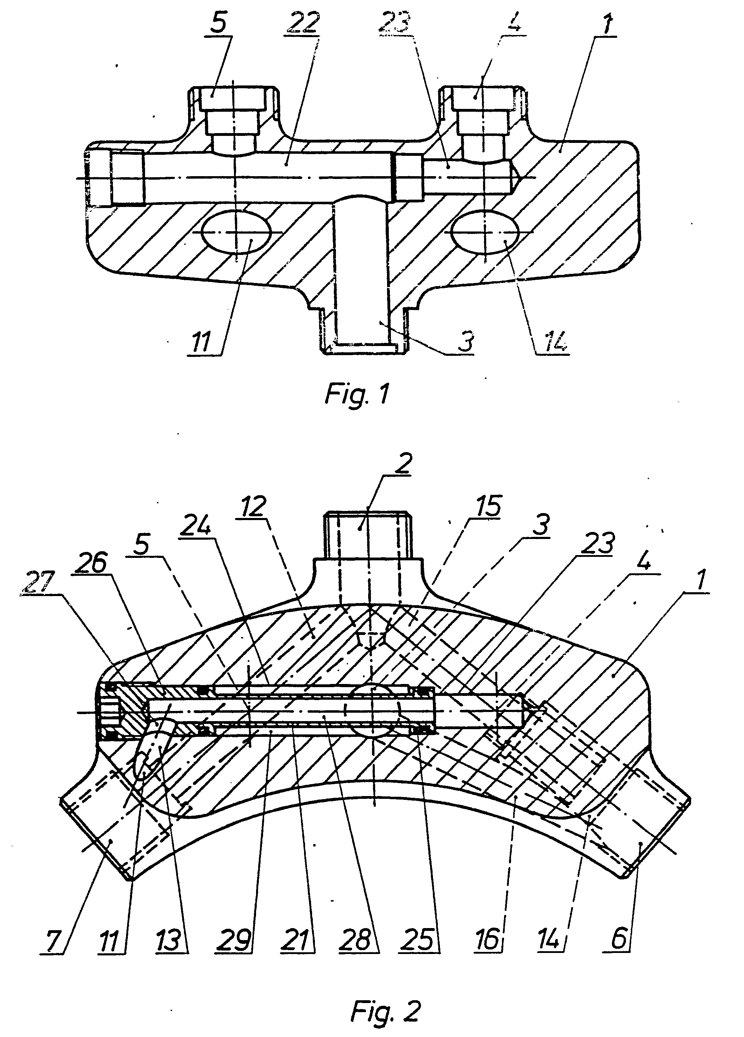

Bei der in den Fig. 1 und 2 dargestellten Ausführung durchsetzt eine Umlenkhülse 21 den Armaturenkörper 1 quer. Die Umlenkhülse 21 ist in eine Stufenbohrung 22 eingebracht, die von einer Seitenfläche des Armaturenkörpers 1 ausgeht. Der Teil 23 geringeren Durchmessers der Bohrung 22 steht mit dem Gerätezulauf 4 für Kaltwasser in Verbindung. In den Teil 24 größeren Durchmessers der Bohrung 22 ist die Umlenkhülse 21 abgedichtet eingebracht. An der Schulter zwischen den Teilen 23 und 24 liegt ein mit einem Dichtungsring versehener Teller 25 an. An dieser Seite ist die Umlenkhülse 21 offen, sodaß ihre Innenbohrung 28 mit dem Teil 23 geringeren Durchmessers der Stufenbohrung 22 in Verbindung steht. Auf der dem Teller 25 abgewandten Seite ist die Umlenkhülse 21 als Schraubhülse 26 ausgeführt. In diesem Teil ist eine Querbohrung 27 vorgesehen, die mit dem von dem Warmventil 7 abgehenden Teil 13 der Gerätezuführung 11 in Verbindung steht. In Axialrichtung zu beiden Seiten der Querbohrung 27 sind in der Schraubhülse 26 Dichtungsringe vorgesehen. Zwischen der Umlenkhülse 21 und dem Teil 24 größeren Durchmessers der Stufenbohrung 22 entsteht ein Ringraum 29, der durch den Teller 25 und die Schraubhülse 26 gegenüber der Innenbohrung 28 und dem Teil 23 geringeren Durchmessers der Stufenbohrung 22 abgeschlossen ist. Der Ringraum 29 steht mit dem Warmwasser-Überlauf 5 einerseits und mit dem Mischwasser-Ablauf 3 andererseits in Verbindung, in den auch der abgehende Teil 16 der Ablaufzuführung 14 mündet. Der Ventilsitz für das Kaltventil 6 ist bei dieser Ausführung einschraubbar ausgeführt.

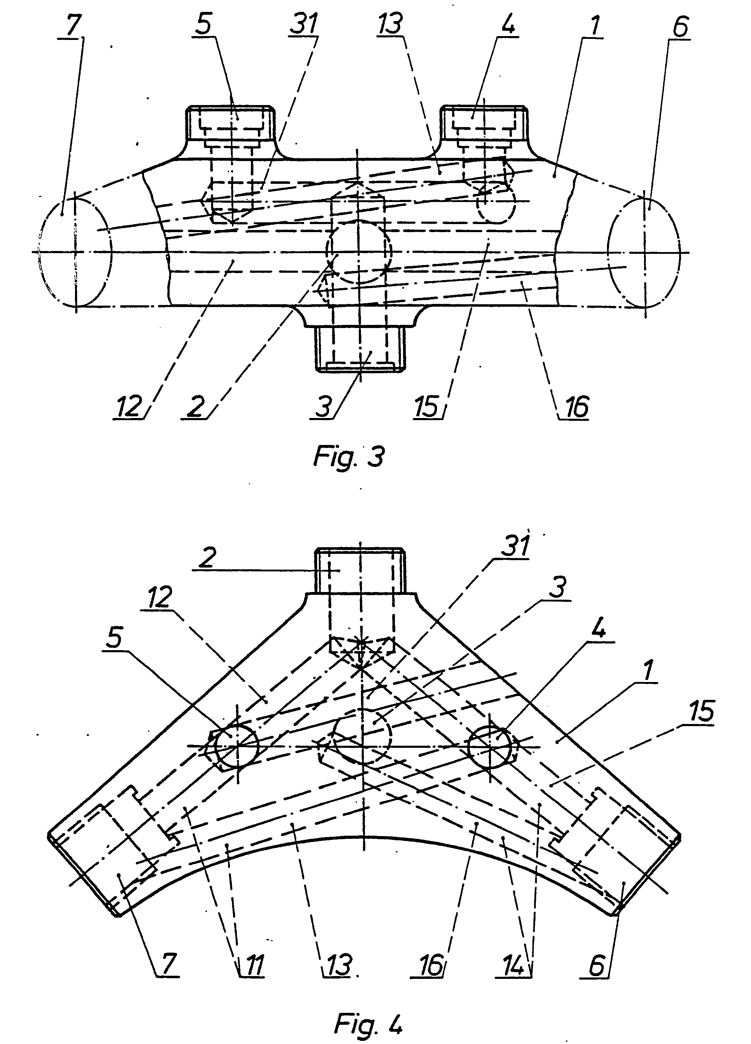

Bei der in den Fig. 3 und 4 dargestellten Ausführung liegen der an dem Warmventil 7 ankommende Teil 12 der Gerätezuführung 11 und der beim Kaltventil 6 ankommende Teil 15 der Ablaufzuführung 14 in derselben Ebene. Ein Kanal 31, der den Warmwasser-Überlauf 5 mit dem Mischwasser-Ablauf 3 verbindet, liegt in einer zu der genannten Ebene parallelen Ebene. Der von dem Warmventil 7 abgehende Teil 13 der Gerätezuführung liegt in einer zu den parallelen Ebenen schrägen Ebene. Der von dem Kaltventil 6 abgehende Teil 16 der Ablaufzuführung 14 liegt in einer zu der genannten schrägen Ebene im wesentlichen parallelen Ebene. Dabei kreuzen sich folgende Kanäle : In der Ansicht in Richtung von Gerätezulauf 4 und Warmwasser-Überlauf 5 der vom Warmventil 7 abgehende Teil 13 der Gerätezuführung 11 mit dem vom Kaltventil 6 abgehenden Teil 16 der Ablaufzuführung 14 ; in der Ansicht in Richtung des Kaltwasser-Zulauf 2 der vom Warmventil 7 abgehende Teil 13 der Gerätezuführung 11 mit dem Kanal 31, der den Warmwasser-Überlauf 5 mit dem Mischwasser-Ablauf 3 verbindet.

Bei beiden vorgenannten Ausführungen ist der herkömmliche Betrieb eines Heißwassergeräts gewährleistet : Wird das Warmventil 7 geöffnet, wird Kaltwasser aus dem Kaltwasser-Zulauf 2 über die Gerätezuführung 11 dem Gerätezulauf 4 für Kaltwasser zugeführt. In Abhängigkeit von der Menge des zugeführten Kaltwassers gelangt Warmwasser aus dem Warmwasser-Überlauf 5 in den Mischwasser-Ablauf 3. Dort mischt sich das Warmwasser mit ggf. durch Öffnen des Kaltventils 6 aus dem Kaltwasser-Zulauf 2 über die Ablaufzuführung 14 zugeführtem Kaltwasser. Andererseits ist durch die Verwendung der Hülse und/oder die Führung der Warm- und Kaltwasser führenden Kanäle die Übereinstimmung der Bedienungselemente der Überlauf-Armatur mit einer Druckarmatur gegeben.

## Patentansprüche

1. Armatur für über einem Armaturenkörper montierte Überlauf-Heißwassergeräte mit einem Mischwasser-Ablauf (3), mit einem Kaltwasser-Zulauf (2), der in eine mit einem Warmventil (7) versehene Kaltwasser-Gerätezuführung (11) zu einem Gerätezulauf (4) für das Heißwassergerät und in eine mit einem Kaltventil (6) versehene Kaltwasser-Ablaufzuführung (14) zum Mischwasser-Ablauf (3) geteilt ist, sowie mit einem aus dem Heißwassergerät gespeisten Warmwasser-Überlauf (5), der in dem Mischwasser-Ablauf (3) mündet, dadurch gekennzeichnet, daß der Armaturenkörper (1) von einer eine Innenbohrung (28) aufweisenden und zwischen sich und dem Armaturenkörper (1) einen von der Innenbohrung (28) getrennten Ringraum (29) bildenden Umlenkhülse (21) quer durchsetzt ist, deren Innenbohrung (28) einerseits mit dem von dem in Ansicht in Richtung des Kaltwasserzulaufs (2) links angeordneten Warmventil (7) abgehenden Teil (13) der Gerätezuführung (11) und andererseits mit dem Gerätezulauf (4) verbunden ist, und deren Ringraum (29) mit dem Warmwasser-Überlauf (5), dem Mischwasser-Ablauf (3) und dem von dem rechts angeordneten Kaltventil (6) abgehenden Teil (16) der Ablaufzuführung (14) verbunden ist.

2. Armatur für über einem Armaturenkörper montierte Überlauf-Heißwassergeräte mit einem Mischwasser-Ablauf (3), mit einem Kaltwasser-Zulauf (2), der in eine mit einem Warmventil (7) versehene Kaltwasser-Gerätezuführung (11) zu einem Gerätezulauf (4) für das Heißwassergerät und in eine mit einem Kaltventil (6) versehene Kaltwasser-Ablaufzuführung (14) zum Mischwasser-Ablauf (3) geteilt ist, sowie mit einem aus dem Heißwassergerät gespeisten Warmwasser-Überlauf (5), der in den Mischwasser-Ablauf (3) mündet, dadurch gekennzeichnet, daß der bei dem in Ansicht in Richtung des Kaltwasserzulaufs (2) links angeordneten Warmventil (7) ankommende Teil (12) der Gerätezuführung (11) und der bei dem rechts angeordneten Kaltventil (6) ankommende Teil (15) der Ablaufzuführung (14) in derselben Ebene, ein Kanal (31) von dem Warmwasser-Überlauf (5) zum Mischwasser-Ablauf (3) in einer dazu parallelen Ebene, der von dem Warmventil (7) abgehende Teil (13) der Gerätezuführung (11) in einer bezogenen auf die parallelen Ebenen schrägen Ebene und der von dem Kaltventil (6) abgehende Teil (16) der Ablaufzuführung (14) in einer zu der schrägen Ebene im wesentlichen parallelen Ebene verlaufen, wobei in der Ansicht in Richtung von Gerätezulauf (4) und Warmwasser-Überlauf (5) der von dem Warmventil (7) abgehende Teil (13) der Gerätezuführung (11) einerseits und der von dem Kaltventil (6) abgehende Teil (16) der Ablaufzuführung (14) andererseits sowie in der Ansicht in Richtung des Kaltwasser-

Zulaufs (2) der vom Warmventil (7) abgehende Teil (13) der Gerätezuführung (11) und der Kanal (31) vom Warmwasser-Überlauf (5) zum Mischwasser-Ablauf (3) sich kreuzen.

## Claims

1. Pipe fitting for overflow-type hot water devices mounted above a fitting body, with a mixed water outlet (3), with a cold water inlet (2) which is divided into a device cold water feeder (11), provided with a hot valve (7), leading to a device inlet (4) for the hot water device and into a outlet cold water feeder (14), provided with a cold valve (6), leading to the mixed water outlet (3), as well as with a hot water overflow (5), supplied from the hot water device, which leads into the mixed water outlet (3), characterized by the fact that the fitting body (1) is traversed at right angles by deflecting sleeve (21), having an internal passage (28) and forming a separate annular chamber (29) between itself and the fitting body (1), whose internal passage (28) is connected on one side to the section (13) of the device feeder (11) emerging from hot valve (7) located on the LHS seen in the direction of cold water inlet (2) and on the other side to the device inlet (4), and whose annular chamber (29) is connected to the hot water overflow (5), the mixed water outlet (3) and section (16) of outlet feeder (14) emerging from cold valve (6) located on the RHS.

2. Pipe fitting for overflow-type hot water devices, mounted above a fitting body, with a mixed water outlet (3), with a cold water inlet (2) which is divided into a device cold water feeder (11), provided with a hot valve (7), leading to a device inlet (4) for the hot water device and into a outlet cold water feeder (14), provided with a cold valve (6), leading to the mixed water outlet (3), as well as with a hot water overflow (5), supplied from the hot water device, which leads into the mixed water outlet (3), characterized by the fact that section (12) of device feeder (11) arriving at hot valve (7) located on the LHS seen in the direction of cold water inlet (2) and section (15) of outlet feeder (14) arriving at cold valve (6) located on the RHS are in the same plane, a passage (31) from the hot water overflow (5) to the mixed water outlet (3) are in a plane parallel thereto, section (13) of device feeder (11) coming from hot valve (7) is on an oblique plane in relation to the parallel planes and section (16) of outlet feeder (14) coming from cold valve (6) is on a plane essentially parallel to the oblique plane, whereby, looking in the direction of device inlet (4) and hot water overflow (5), section (13) of device feeder (11) coming from hot valve (7) on the one hand and section (16) of outlet feeder (14) coming from cold valve (6) on the other hand as well as section (13) of device feeder (11) coming from hot valve (7) seen in the direction of cold water inlet (2) and passage (31) from hot water overflow (5) to mixed water outlet (3) intersect.

## Revendications

1. Appareil de robinetterie pour chauffe-eau à écoulement libre monté au-dessus du corps d'un appareil de robinetterie, équipé d'une sortie d'eau mélangée (3), d'une entrée d'eau froide (2), laquelle se divise en une tuyauterie (11) munie d'un robinet à eau chaude (7) et destinée à amener de l'eau froide à une entrée (4) pour le chauffe-eau et en une tuyauterie d'écoulement (14) munie d'un robinet à eau froide (6) et destinée à amener de l'eau froide à la sortie d'eau' mélangée (3), ainsi que d'une tubulure de trop-plein d'eau chaude (5) alimentée à partir du chauffe-eau et qui débouche dans la sortie d'eau mélangée (3), caractérisé en ce que le corps (1) de l'appareil de robinetterie est traversé transversalement par une douille de renvoi (21) présentant un alésage interne (28) et formant entre elle et le corps (1) de l'appareil de robinetterie un espace annulaire (29) séparé de l'alésage interne (28), douille de renvoi dont l'alésage interne (28) communique d'une part avec la partie (13) de la tuyauterie d'amenée (11) qui part du robinet à eau chaude (7) disposé à gauche dans la vue en direction de l'entrée d'eau froide (2) et, d'autre part avec l'entrée (4) du chauffe-eau, et dont l'espace annulaire (29) est en communication avec la tubulure de trop-plein d'eau chaude (5), la sortie d'eau mélangée (3) et la partie (16) de la tuyauterie d'écoulement (14) qui part du robinet à eau froide (6)_ disposé à droite.

2. Appareil de robinetterie pour chauffe-eau à écoulement libre montés au-dessus du corps d'un appareil de robinetterie, équipé d'une sortie d'eau mélangée (3), d'une entrée d'eau froide (2), laquelle se divise en une tuyauterie (11) munie d'un robinet à eau chaude (7) et destinée à amener de l'eau froide à une entrée (4) pour le chauffe-eau et en une tuyauterie d'écoulement (14) munie d'un robinet à eau froide (6) et destinée à amener de l'eau froide à la sortie d'eau mélangée (3), ainsi que d'une tubulure de trop-plein d'eau chaude (5) alimentée à partir du chauffe-eau et qui débouche dans la sortie d'eau mélangée (3), caractérisé en ce que la partie (12) de la tuyauterie d'amenée (11) qui arrive au robinet à eau chaude (7), lequel dans la vue en direction de l'entrée d'eau froide (2) est disposé à gauche, et la partie (15) de la tuyauterie d'écoulement (14) qui arrive au robinet à eau froide (6) monté à droite s'étendent dans le même plan, un canal (31) s'étendant de la tubulure de trop-plein d'eau chaude (5) à la sortie d'eau mélangée (3) s'étendent dans un plan parallèle à ce premier plan, la partie (13) de la tuyauterie d'amenée (11) qui part du robinet à eau chaude (7) s'étend dans un plan oblique par rapport aux plans parallèles et la partie (16) de la tuyauterie d'écoulement (14) qui part du robinet à eau froide (6) s'étend dans un plan sensiblement parallèle audit plan oblique, et ce de telle manière que dans la vue en direction de l'entrée (4) du chauffe-eau et de la tubulure de trop-plein d'eau chaude (5) la partie (13) de la tuyauterie d'amenée (11) qui part du robinet à eau chaude (7), d'une part, et la partie (16) de la tuyauterie d'écoulement (14) qui part du robinet à eau froide (6), d'autre part, ainsi que, dans la vue en direction de l'entrée d'eau froide (2), la partie (13) de la tuyauterie d'amenée (11) qui part du robinet à eau chaude (7) et le canal (31) s'étendant de la tubulure de trop-plein d'eau chaude (5) en direction de la sortie d'eau mélangée (3) se croisent.

0 187 179

Fig. 1

Fig. 2

1

Fig. 3

Fig. 4

2